# EUROPÄISCHE PATENTSCHRIFT

(11) **EP 3 239 415 B1**
(45) Veröffentlichungstag und Bekanntmachung des Hinweises auf die Patenterteilung: **07.10.2020**
(21) Anmeldenummer: 17168401.2
(22) Anmeldetag: 27.04.2017
(51) Int. Cl.: E03C 1/04

(54) **WASSERHAHN MIT HÜLLE**
TAP WITH CASE
ROBINET D'EAU COMPRENANT UNE ENVELOPPE

(30) Priorität: 29.04.2016 ES 201600312
(43) Veröffentlichungstag der Anmeldung: 01.11.2017
(73) Patentinhaber: Canos Conesa, Alvaro Juan, 12520 Nules (Castellon) (ES)
(72) Erfinder: Canos Conesa, Alvaro Juan, 12520 Nules (Castellon) (ES)
(74) Vertreter: Dosterschill, Peter

(56) Entgegenhaltungen:
- WO-A1-2008/104517
- DE-A1-102008 064 547
- US-A1- 2006 118 188
- US-A1- 2006 207 665
- US-A1- 2007 119 506

## Beschreibung

Die vorliegende Erfindung betrifft das technische Gebiet von Sanitäranlagen, insbesondere Hähne für die Ausgabe von Wasser und einen Wasserhahn nach dem Oberbegriff des Patentanspruchs 1.

Hähne für die Ausgabe von kaltem und/oder heißem Wasser werden an einer Vielzahl von Orten verwendet, wie zum Beispiel in Küchen, Toiletten und Duschen, im Haushalt, in der Öffentlichkeit, in Restaurantbetrieben, im gewerblichen Bereich, sowie in Laboratorien, in Krankenhäusern, in Tierkliniken, in Fabriken, usw. Die Hähne sind auf den Oberflächen von Trägern angebracht, beispielsweise von Arbeitsplatten, Wandfliesen oder Wandfronten.

Wasserhähne sind beispielsweise aus GB 2519280A, US2004128756A1, GB 1478458A, JP 2016121484A, CN 203162219U, CN101936417A, WO2011160558A1, US2008196159A1, JPH11287335A, JP3349428B2, EP0485346A und CN2872018Y bekannt.

Aus WO 2008/104517 A1 ist ein Wasserhahn bekannt, der unter anderem Holzmaterial aufweist.

Aus DE 10 2008 064547 A1 ist ein Wasserarmaturdekorelement bekannt, wobei ein aus Kunststoff hergestellter hülsenförmiger Abschnitt, mit dem das Wasserarmaturdekorelement auf die Wasserarmatur aufsteckbar ist, einen eingelagerten partikelförmigen Füllstoff aufweist.

Aus US 2006/118188 A1 ist ein Wasserhahn bekannt, der zu Vermeidung von Verbrühungen mit einem Material überzogen ist, das Schaumstoff, Kunststoff, Harz oder Fiberglass ist.

Aus US 2007/119506 A1 und US 2006/207665 A1 ist jeweils eine dekorative Wasserhahn-Anordnung bekannt, wobei mindestens ein aus Kunststoff bestehendes Dekorationselement auf Metallelementen des Wasserhahns angeordnet ist.

Heutzutage sind Werkstoffe fortgeschrittener Zusammensetzung natürlicher Mineralien und Polymeren unter dem Namen "Solid Surface" oder feste Oberfläche bekannt. Die Werkstoffe sind beispielsweise geschmolzene synthetische Materialien geringer Porosität aus Harz mit mineralischen Füllstoffen. Einige Eigenschaften sind zum Beispiel in "Solid Surface Properties and Applications" vom 20. Januar 2003 (veröffentlicht von ICPA http://www.icpa-hq.org/consumers/properties.pdf) beschrieben. Dies betrifft eine Mischung aus der Polymerisierung von Harzen und reaktiven Monomeren mit mineralischen Füllstoffen, Pigmenten und Additiven.

Harze in "Solid Surface Materialien" können beispielsweise Acrylharze, Epoxidharze, Polyesterharze, modifizierte Polyesterharze mit Acrylharzen und Kombinationen davon sein, während mineralische Füllstoffe mineralische Füllstoffe aus Bauxit, Trihydrate Aluminiumoxid, Marmor, Granit, Kieselerde, Quarz, Onyx, Gips, Kalziumkarbonat, Kaolin und Kombinationen davon sein können.

"Solid Surface"-Materialien zeichnen sich durch ihren Mangel an Poren, durch ihre antibakterielle Funktion, Härte, Festigkeit, Haltbarkeit aus; sie lassen sich in einfacher Weise reparieren; sie sind wartungsarm und lassen sich einfach reinigen. Weiterhin sind sie leicht formbar und werden daher in zahlreichen Anwendungen eingesetzt, zu denen die Herstellung von Sanitäranlagen wie Waschbecken, Badewannen und Duschwannen, Wandverkleidungen, Trennwände und Arbeitsplatten gehören, das heißt, Elemente, die als Träger für Hähne dienen. Eine der Marken, unter der "Solid Surface"-Produkte vermarktet werden, ist die Marke KRION des spanischen Herstellers PORCELANOSA.

Die Hähne haben üblicherweise einen Metallkörper, in der Regel aus Messing, mit einer geschlossenen Basis, welche mit mindestens einem Wassereinlass und einem Abschnitt mit einem Wasserauslass versehen ist, einen Regel-Mechanismus zum Wasserregeln, der in dem Körper zwischen dem Wassereinlass und dem Wasserauslass untergebracht ist, ein Betätigungselement, das mit einem Regelmechanismus verbunden ist, und ein Rohr, das mit dem Wasserauslass verbunden ist.

Die Anordnung eines Wasserhahnes umfasst in der Regel einen Träger, eine Durchgangsbohrung, durch die ein Rohr hindurchgeht, das mit dem Wassereinlass des Metallkörpers verbunden ist. Der Hahn ist in der Regel so angebracht, dass seine geschlossene Basis, oder eine periphere Rippe des Metallkörpers, auf einem Abschnitt der Oberfläche des Trägers ruht, der das Durchgangsloch umgibt; der Mechanismus auf dem Träger ist durch eine Scheibe befestigt, die auf der Unterkante des Durchgangslochs angeordnet ist, und eine Einheit von Schraube oder Bolzen, die in der Unterseite des Metallkörpers befestigt ist, geht durch die Unterlegscheibe und Mutter hindurch.

### Beschreibung

Wenn die Mutter angezogen wird, wird der Metallkörper gegen die obere Oberfläche des Trägers gedrückt und die Unterlegscheibe gegen die unteren Kanten der Durchgangsbohrung des Trägers, so dass der Träger zwischen der Unterlegscheibe und dem metallischen Körper des Hahns klemmend befestigt bleibt.

Zwischen der Basis, oder gegebenenfalls zwischen der perimetrischen Rippe des Metallkörpers, und der Trägeroberfläche, wird in der Regel ein Gummi-O-Ring angeordnet. Im Bereich dieser Dichtung sammelt sich üblicherweise Schmutz an, der schwer zu reinigen ist, und der einen unhygienischen Status verursacht. Dies betrifft auch Träger aus "Solid Surface"- Material.

Der Erfindung liegt die Aufgabe zugrunde, einen Wasserhahn der eingangs genannten Art zu schaffen, der die oben genannten Nachteile des Standes der Technik überwindet.

Diese Aufgabe wird durch einen Wasserhahn gelöst, der in den Patentansprüchen definiert ist. Dieser Hahn mit einem Gehäuse und einem Metallkörper weist folgende Komponenten auf; eine geschlossene Basis, die mit mindestens einem Wassereinlass und einem Abschnitt mit einem Wasserauslauf versehen ist, einen Regelmechanismus zum Wasserregeln, der in dem Körper zwischen dem Wassereinlass und dem Wasserauslass untergebracht ist, ein Betätigungselement, das mit dem Regelmechanismus verbunden ist, und ein Rohr, das mit dem Wasserauslass verbunden ist, wobei der Hahn ein Gehäuse umfasst, das zumindest die geschlossene Basis des Metallkörpers des Hahns umschließt, wobei das Gehäuse eine Trägerbasis aufweist. Der Metallkörper ist in dem Gehäuse befestigt, und das Gehäuse ist ein Formstück aus einem Solid-Surface-Material geringer Porosität aus Harz mit mineralischen Füllstoffen ("Solid Surface"), das an einen Träger aus Solid-Surface-Material geringer Porosität aus Harz mit mineralischen Füllstoffen chemisch geschweißt ist.

Dabei umfasst das Solid-Surface-Material vorzugsweise mindestens ein Harz, das aus Acrylharzen, Epoxidharzen, Polyesterharzen, modifizierten Polyesterharzen mit Acrylharzen ausgewählt ist und aus Kombinationen davon, und/oder mindestens einen mineralischen Füllstoff, der aus mineralischen Füllstoffen aus Bauxit, Aluminiumtrihydraten, Marmor, Granit, Kieselerde, Quarz, Onyx, Gips, Kalziumkarbonat, Kaolin ausgewählt ist und aus Kombinationen davon.

Die Erfindung zeichnet sich durch eine Mehrzahl von Vorteilen aus. Das Nichtvorhandensein einer nicht erforderlichen Dichtung zwischen der Basis des Wasserhahns und der Montagefläche verhindert einerseits das Filtrieren von Tropfwasser durch diese Dichtung bis zu dem unteren Abschnitt oder der Rückseite der Oberfläche (Arbeitsplatte oder Wand), so dass Probleme wie Feuchtigkeit oder Verschlechterung der Materialien von Komponenten zum Beispiel unter Waschbecken und Senken (in der Regel, Holzschränke, die anfällig für Feuchtigkeit sind) vermieden werden.

Da eine Dichtung oder ein Zusammentreffen von 90° zwischen der Basis des Wasserhahns und der Montagefläche nicht vorhanden ist, sondern vielmehr ein Übergang mit einer Krümmung und eine hinsichtlich des gleichen Materials vollständige Integration, wird andererseits die Geschwindigkeit und die Leichtigkeit der Reinigung durch ein Tuch oder einen Lappen wesentlich verbessert. Reinigungsarbeiten wie bei einer Anordnung mit einer herkömmlichen Dichtung werden reduziert. Außerdem werden erheblich verbessere hygienische Zustände erzielt, dies durch die Eigenschaften von niedriger Porosität des Materials: sonst übliche Probleme wie Schimmelbildung sowie Kalk- und Schmutzansammlung auf der Verbindungstelle von herkömmlichen Hähnen mit Montageflächen werden mit dem erfindungsgemäßen Wasserhahn vermieden. Diese beiden letztgenannten Vorteile, verbesserte Hygiene und schnelle Reinigung, sind in der Praxis besonders in den Fällen relevant, in denen wie zum Beispiel, in Hoteleinrichtungen, eine verminderte Reinigungszeit von Badezimmern einen direkten Einfluss auf die Betriebskosten hat; in Einrichtungen mit einer großen Anzahl von Hähnen, zum Beispiel in Hotels, in öffentlichen Toiletten, etc. stellen die vorteilhafte Reinigungsbeschleunigung und die Kostenreduzierung einen besonderen Vorteil des erfinderischen Wasserhahns dar.

In einer bevorzugten Ausführungsform der Erfindung ist der Wasserhahn ein EinhebelMischer, der folgende Komponenten umfasst: einen Metallkörper mit einem oberen Abschnitt, in dem der Wasserauslass angeordnet ist, und ein Rohr, das mit dem Wasserauslauf gekoppelt ist, so dass das Gehäuse den Metallkörper umschließt, und eine Durchgangsöffnung umfasst, durch die sich das Rohr erstreckt.

Das Solid-Surface-Material des Gehäuses kann mindestens ein Harz umfassen, ausgewählt aus Acrylharzen, Epoxidharzen, Polyesterharzen, modifizierten Polyesterharzen mit Acrylharzen und Kombinationen davon. Im Gegenzug kann das geschmolzene synthetische Material mindestens einen mineralischen Füllstoff umfassen, ausgewählt aus mineralischen Füllstoffen aus Bauxit, Aluminiumtrihydraten, Marmor, Granit, Kieselerde, Quarz, Onyx, Gips, Kalziumkarbonat, Kaolin und Kombinationen davon.

Wenn der Wasserhahn ein Einhebelmischer ist, umfasst das Betätigungselement des Wasserhahnes vorzugsweise eine Kappe, die mit dem Regelmechanismus verbunden ist, mit einer distalen geschlossenen Basis und einer äußeren Schürze. Eine Gehäusekappe umschließt zumindest eine äußere Schürze der Kappe. Die Gehäusekappe ist vorzugsweise ein Formteil aus Solid Surface-Material geringer Porosität aus Harz mit mineralischen Füllstoffen, wobei das Solid Surface-Material, aus dem gleichen Material wie das Gehäuse bestehen kann.

Die Trägerbasis des Gehäuses ist mit einem Träger, ausgewählt aus Arbeitsplatten und Wandverkleidungen, verschweißt, und besteht aus dem gleichen Solid Surface-Material wie das Solid Surface-Material des Trägers, mit dem sie verschweißt wird.

Nachstehend sind beispielhafte Ausführungsformen der Erfindung anhand der Zeichnungen beschrieben.

Es zeigt
- Figur 1: eine perspektivische Seiten-Vorderansicht einer Ausführungsform des Wasserhahns gemäß der Erfindung,
- Figur 2: eine Explosionsansicht des Wasserhahns gemäß der Erfindung,
- Figur 3: eine Seitenansicht der Hülle des in Figur 1 dargestellten Wasserhahns, der nach einer ersten beispielhaften Anordnung mit einer Arbeitsplatte verschweißt ist, und
- Figur 4: eine Seitenansicht der Hülle des in Figur 1 dargestellten Wasserhahns, der nach einer zweiten beispielhaften Anordnung mit einer Arbeitsplatte verschweißt ist.

In diesen Figuren bezeichnen die Bezugszeichen folgende Elemente:
- 1: Metallkörper
- 1a: geschlossene Basis
- 1b: Wasserauslass
- 1c: Rohr
- 1d: Wassereinlass
- 1e: Sackloch
- 1f: Düse
- 2: Gehäuse
- 2a: Trägerbasis
- 2b: Durchlassöffnung
- 2c: axiale Aussparung
- 2d: Erweiterung
- 2e: unterer Abschnitt
- 2f: obere Fläche
- 2g: untere Trägerfläche
- 3: Schraubenstift, Madenschraube
- 4: Betätigungselement
- 4a: distale geschlossene Basis
- 4b: äußere Schürze
- 4c: Durchgangsloch
- 5: Gehäusekappe
- 6: Träger
- 6a: Montageöffnung
- 6b: Stufe
- 6c: oberer Umfang
- 7: Zuführrohr
- 8: Schaft
- 9: Unterlegscheibe
- 10: Nuss, Schraube

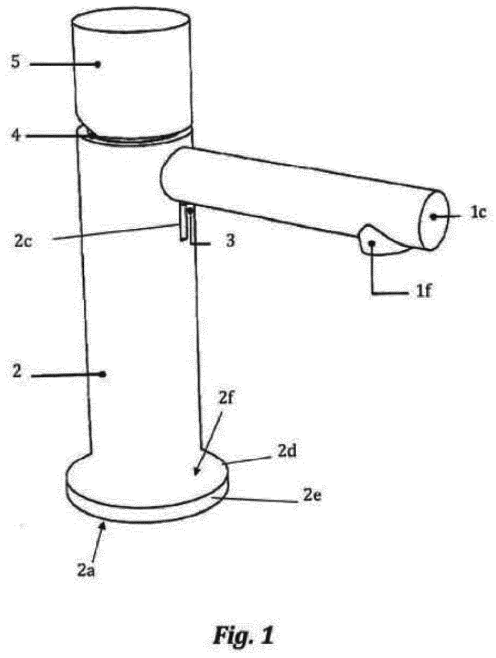

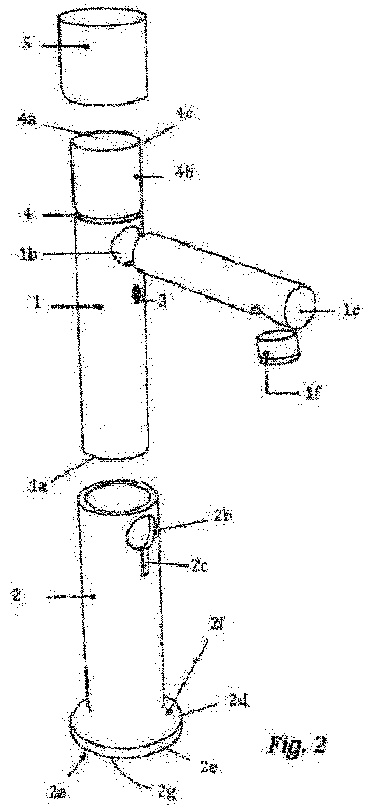

In den Ausführungsformen der Figuren 1 bis 4 ist ein Monoblock-Hahn/Einhebelmischer mit Hülle dargestellt, der folgende Elemente aufweist: einen Metallkörper 1, der eine geschlossene Basis 1a hat, die mit einem Wassereinlass 1d und einem Abschnitt mit einem Wasserauslass 1b versehen ist, einen an sich bekannten, in den Figuren nicht dargestellten (Regel-)Mechanismus, der in dem Metallkörper 1 zwischen dem Wassereinlass 1d und dem Wasserauslass 1b untergebracht ist, ein Betätigungselement 4, das mit dem Regelmechanismus verbunden ist, und ein Rohr 1c, das mit dem Wasserauslass verbunden ist.

Der Metallkörper ist ein röhrenförmiger Metallkörper 1 mit einem oberen Abschnitt, in dem der Wasserauslass 1b und das Rohr 1c, das mit dem Wasserauslass verbunden ist, angeordnet sind. Der Wasserauslass 1b des Metallkörpers ist ein Gewindeloch, in dem ein Gewindeabschnitt des Rohrs 1c einschraubt ist.

Der in den Figuren dargestellte Hahn umfasst eine starre Hülle mit einem Gehäuse 2, das mindestens die geschlossene Basis 1a des Metallkörpers 1 des Hahns umschließt, wobei das Gehäuse 2 eine Trägerbasis 2a aufweist, die als Stütze der Hülle ausgelegt ist. Der Metallkörper 1 ist in dem Gehäuse 2 (unbewegbar) befestigt.

Das Gehäuse 2 ist ein Formteil aus einem geschmolzenen synthetischen Material geringer Porosität aus Harz mit mineralischen Füllstoffen "Solid Surface", das mit einem Träger 6 aus geschmolzenem synthetischen Material geringer Porosität aus Harz mit mineralischen Füllstoffen chemisch schweißbar ist. Das Gehäuse 2 umgibt den rohrförmigen Metallkörper 1 in Formverbindung und umfasst eine Durchgangsöffnung 2b, durch die sich das Rohr 1c erstreckt.

Die Durchgangsöffnung 2b im Gehäuse 2 ist ein kreisförmiges Loch, das einen inneren Umfang aufweist, der zumindest teilweise den Außenumfang des hinteren Abschnitts des Rohrs kontaktiert. Von der Durchgangsöffnung 2b erstreckt sich in axialer Richtung eine Ausnehmung 2c in Form eines Schlitzes in Richtung der Trägerbasis 2a des Gehäuses. In der Vorderseite des Rohrs 1c ist eine in Fluidverbindung mit dem Wasserauslass 1b des Metallkörpers 1 an sich bekannte Düse 1f vorgesehen. Die Rückseite der Rohrs 1c weist ein Sackloch 1e mit Gewinde auf, das axial mit der radialen Aussparung ausgerichtet ist, in dem eine Gewindemadenschraube 3 zum Befestigen des Rohrs 1c in Bezug auf das Gehäuse 2 eingeschraubt ist. Die Breite des Radialschlitzes ist durch den Durchmesser des Schraubstiftes festgelegt.

Das Betätigungselement 4 des Monoblock-Hahns umfasst eine herkömmliche Kappe, die mit dem Regelmechanismus verbunden ist, mit einer distalen geschlossenen Basis 4a und einer äußeren Schürze 4b. Im Gegenzug weist die Hülle ferner eine Gehäusekappe 5 auf, welche zumindest die äußere Schürze 4b der Kappe in Formverbindung umgibt. Das Gehäuse 2 und die Gehäusekappe 5 sind getrennte Teile.

Die Trägerbasis 2a des Gehäuses 2 umfasst eine Erweiterung 2d mit einem unteren Abschnitt 2e mit einer unteren Trägerfläche 2g und einem oberen Abschnitt mit einer oberen Fläche 2f. Der untere Abschnitt 2d der Erweiterung weist eine ringförmige Anordnung auf, während der obere Abschnitt der Erweiterung 2d eine stumpfkegeligen Anordnung hat und eine konkav gekrümmte und in Richtung des Gehäuses 2 ansteigende obere Fläche 2f aufweist.

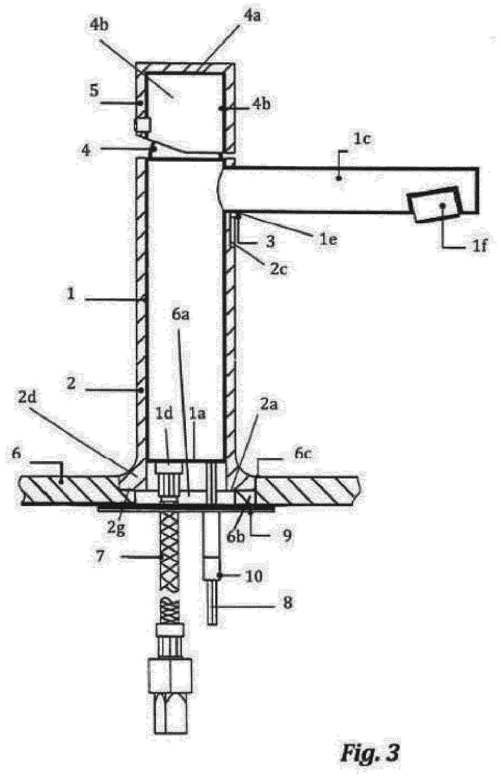

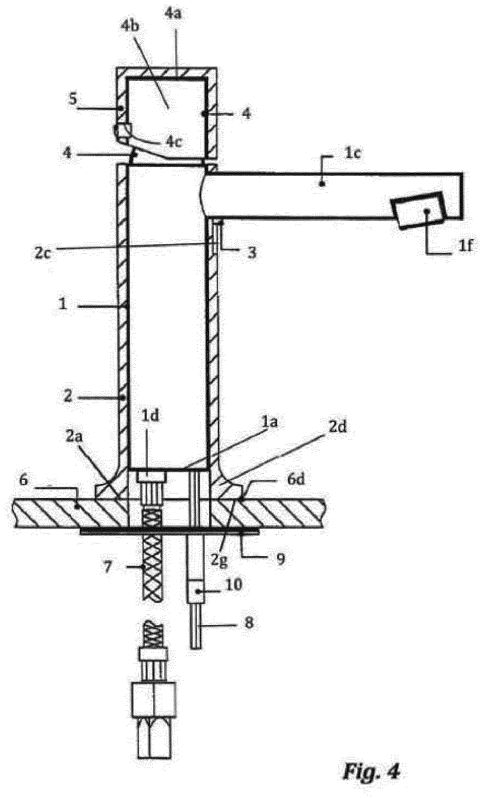

In den Figuren 3 und 4 sind zwei Ausführungsformen zur Montage des Hahns in einem Träger 6 gemäß der Erfindung dargestellt, insbesondere in einer Arbeitsplatte, die mit einer Montageöffnung 6a vorgesehen ist; in der in Figur 3 dargestellten Ausführungsform ist eine eine perimetrische Stufe 6b vorgesehen.

In Figur 3, die die Montage der entsprechenden Ausführungsform des erfindungsgemäßen Hahns veranschaulicht, ist die Trägerfläche 2g der Trägerbasis 2a des Gehäuses 2 auf der perimetrischen Stufe 6b der Öffnung 6a gestützt, und der untere Ringabschnitt 2e der Erweiterung 2d ist durch den oberen Umfang 6c der Montageöffnung 6a festgelegt. Die Trägerfläche 2g des Gehäuses 2 ist mit der perimetrischen Stufe 6b und dem oberen Umfang der Montageöffnung 6a chemisch verschweißt.

In Figur 4, die die Montage der entsprechenden Ausführungsform des erfindungsgemäßen Hahns veranschaulicht, sind die Trägerfläche 2g und die Trägerbasis 2a des Gehäuses 2 mit einem Streifen der Fläche 6d des Trägers 6 chemisch verschweißt, der die Montageöffnung 6a umgibt.

In der Montageöffnung 6a (Fig. 3) ist ein Zuführrohr 7, das mit dem Wassereinlass 1d des Metallkörpers 1 verbunden ist, und ein Schaft 8 angeordnet, der im unteren Abschnitt des Metallkörpers 1 befestigt ist. Das Zuführrohr 7 und der Schaft 8 verlaufen durch entsprechende Löcher in einer Unterlegscheibe 9, die auf der unteren Kante der Montageöffnung 6a angeordnet ist. Im Abschnitt des Schafts 8 ist eine Schraube 10 so montiert, dass durch das Einschrauben eine Kraft auf die Trägerfläche 2g (Fig. 3) oder die Trägerbasis 2a und die Trägerfläche 2g (Fig. 4) gegen den Träger 6 ausgeübt wird, und auf die Scheibe 9 gegen die unteren Kanten der Montageöffnung 6a des Trägers 6, so dass der Träger 6 zwischen der Scheibe 9 und dem Gehäuse 2 des Hahns fest eingeklemmt bleibt.

Bei den in den Figuren gezeigten Ausführungsform sind das Gehäuse 2 und die Kappe 5 aus dem gleichen "Solid Surface"- Material wie das Material des Trägers 6 hergestellt.

Die vorstehend beschriebene Erfindung 1 betrifft also einen Hahn mit Hülle mit einem Metallkörper 1, wobei der Hahn aufweist: eine geschlossene Basis 1a, welche mit mindestens einem Wassereinlass 1d und einem Abschnitt mit einem Wasserauslass 1b versehen ist, einen Regelmechanismus zum Wasserregeln, der in dem Metallkörper 1 zwischen dem Wassereinlass 1d und dem Wasserauslass 1b untergebracht ist, ein Betätigungselement 4, das mit dem Regelmechanismus verbunden ist, ein Rohr 1c, das mit dem Wasserauslass verbunden ist, eine starre Hülle mit einem Gehäuse 2, das zumindest die geschlossene Basis 1a des Metallkörpers 1 umschließt, wobei das Gehäuse 2 eine Trägerbasis 2a aufweist, die als Stütze der Hülle ausgelegt ist, und wobei der Metallkörper 1 in dem Gehäuse 2 befestigt ist.

Das Gehäuse 2 ist ein Formstück aus einem geschmolzenen synthetischen Material niedriger Porosität aus Harz mit mineralischen Füllstoffen, das mit einem Träger aus demselben geschmolzenen synthetischen Material niedriger Porosität aus Harz mit mineralischen Füllstoffen chemisch verschweißt ist, und das geschmolzene synthetische Material kann mindestens ein Harz umfassen, das aus Acrylharzen, Epoxidharzen, Polyesterharzen, modifizierten Polyesterharzen mit Acrylharzen, und Kombinationen davon ausgewählt ist. Weiterhin umfasst das geschmolzene synthetische Material mindestens einen mineralischen Füllstoff, der aus mineralischen Füllstoffen aus Bauxit, Aluminiumtrihydrate, Marmor, Granit, Kieselerde, Quarz, Onyx, Gips, Kalziumkarbonat, Kaolin, und Kombinationen davon ausgewählt ist.

## Patentansprüche

1. Wasserhahn mit Träger (6), aufweisend
- einen Metallkörper (1) mit einer geschlossenen Basis (1a), welche mit mindestens einem Wassereinlass (1d) und einem Abschnitt mit einem Wasserauslass (1b) versehen ist,
- einen Regelmechanismus zum Wasserregeln, der in dem Metallkörper (1) zwischen dem Wassereinlass (1d) und dem Wasserauslass (1b) untergebracht ist,
- ein Betätigungselement (4), das mit dem Regelmechanismus verbunden ist, und
- ein Rohr (1c), das mit dem Wasserauslass (1b) verbunden ist, wobei
- der Wasserhahn ein Gehäuse (2) umfasst, das zumindest die geschlossene Basis (1a) des Metallkörpers (1) umschließt, wobei das Gehäuse (2) eine Trägerbasis (2a) aufweist,
- der Metallkörper (1) in dem Gehäuse (2) befestigt ist, **dadurch gekennzeichnet, dass**
- das Gehäuse (2) ein Formstück aus einem Solid-Surface-Material niedriger Porosität aus Harz mit mineralischen Füllstoffen ist, das mit dem Träger (6) aus einem Solid-Surface-Material niedriger Porosität aus Harz mit mineralischen Füllstoffen chemisch schweißbar ist,
- das Solid-Surface-Material mindestens ein Harz umfasst, ausgewählt aus Acrylharzen, Epoxidharzen, Polyesterharzen, modifizierten Polyesterharzen mit Acrylharzen, und Kombinationen davon, und/oder
- das Solid-Surface-Material mindestens einen mineralischen Füllstoff umfasst, ausgewählt aus mineralischen Füllstoffen aus Bauxit, Aluminiumtrihydrate, Marmor, Granit, Kieselerde, Quarz, Onyx, Gips, Kalziumkarbonat, Kaolin, und Kombinationen davon,
- die Trägerbasis (2a) des Gehäuses (2) an den Träger (6), ausgewählt aus Arbeitsplatten und Wandverkleidungen, chemisch geschweißt ist, und
- das Gehäuse (2) aus dem gleichen Solid-Surface-Material wie das Solid-Surface-Material des Trägers (6) besteht, mit dem es verschweißt ist.

2. Wasserhahn nach Anspruch 1, **dadurch gekennzeichnet, dass**
- der Wasserhahn ein Einhebelmischer ist, wobei der Metallkörper (1) einen oberen Abschnitt aufweist, in dem der Wasserauslass (1b) und das Rohr (1c) angeordnet sind, wobei das Rohr (1c) in dem Wasserauslass (1 b) befestigt ist, und das Gehäuse (2) den Metallkörper (1) umschließt und eine Durchlassöffnung (2b) umfasst, durch die sich das Rohr (1c) erstreckt.

3. Wasserhahn nach einem der vorstehenden Ansprüche, **dadurch gekennzeichnet, dass**
- der Wasserauslass (1b) eine Gewindebohrung ist, in die ein Gewindeabschnitt des Rohrs (1c) eingeschraubt ist, und
- die Durchlassöffnung (2b) des Gehäuses (2) ein kreisrundes Loch ist.

4. Wasserhahn nach einem der vorstehenden Ansprüche, **dadurch gekennzeichnet, dass**
- die Trägerbasis (2a) des Gehäuses (2) einen unteren Abschnitt (2e) mit einer unteren Trägerfläche (2g) und einem oberen Abschnitt mit einer oberen Fläche (2f) umfasst.

5. Wasserhahn nach Anspruch 4, **dadurch gekennzeichnet, dass**
- die obere Fläche (2f) eine in Richtung des Gehäuses (2) ansteigende Oberfläche ist.

6. Wasserhahn nach einem der Ansprüche 2 und 3 bis 5 sofern abhängig von Anspruch 2, **dadurch gekennzeichnet, dass**
- das Betätigungselement (4) des Einhebelmischers eine Kappe umfasst, die mit dem Regelmechanismus verbunden ist, mit einer geschlossenen distalen Basis (4a) und einer äußeren Schürze (4b),
- eine Gehäusekappe (5) zumindest die äußere Schürze (4b) der Kappe umschließt, und
- das Gehäuse (2) und die Gehäusekappe (5) getrennte Stücke sind.

7. Wasserhahn nach Anspruch 6, **dadurch gekennzeichnet, dass**
- die Gehäusekappe (5) ein Formteil aus einem Solid-Surface-Material mit niedriger Porosität aus Harz mit mineralischen Füllstoffen ist.

8. Wasserhahn nach Anspruch 6 oder 7, **dadurch gekennzeichnet, dass**
- die Gehäusekappe (5) ein Formteil aus dem gleichen Material wie das Gehäuse (2) ist.

## Claims

1. Water tap having a carrier (6), having
- a metal body (1) having a closed base (1a) that is provided with at least one water inlet (1d) and a section having a water outlet (1b),
- a regulating mechanism for regulating water that is accommodated in the metal body (1) between the water inlet (1d) and the water outlet (1b),
- an actuating element (4) that is connected to the regulating mechanism, and
- a pipe (1c) that is connected to the water outlet (1b), wherein
- the water tap comprises a housing (2) that encompasses at least the closed base (1a) of the metal body (1), wherein the housing (2) comprises a carrier base (2a),
- the metal body (1) is fastened in the housing (2), **characterised in that**
- the housing (2) is a moulded piece that is embodied from a solid surface material of low porosity that is embodied from resin having mineral fillers and said housing is chemically weldable to the carrier (6) that is embodied from a solid surface material of low porosity that is embodied from resin having mineral fillers,
- the solid surface material comprises at least one resin that is selected from acrylic resins, epoxy resins, polyester resins, modified polyester resins having acrylic resins and combinations thereof, and/or
- the solid surface material comprises at least one mineral filler that is selected from mineral fillers of bauxite, aluminium trihydrate, marble, granite, silica, quartz, onyx, gypsum, calcium carbonate, kaolin and combinations thereof,
- the carrier base (2a) of the housing (2) is chemically welded to the carrier (6) that is selected from worktops and wall claddings, and
- the housing (2) is embodied from the same solid surface material as the solid surface material of the carrier (6) which said housing is welded to.

2. Water tap according to Claim 1, **characterised in that**
- the water tap is a single lever mixer, wherein the metal body (1) comprises an upper section in which the water outlet (1b) and the pipe (1c) are arranged, wherein the pipe (1c) is fastened in the water outlet (1b) and the housing (2) encompasses the metal body (1) and comprises a throughgoing opening (2b), which the pipe (1c) extends through.

3. Water tap according to one of the preceding claims, **characterised in that**,
- the water outlet (1b) is a threaded hole into which a threaded section of the pipe (1c) is screwed, and
- the throughgoing opening (2b) of the housing (2) is a circular hole.

4. Water tap according to one of the preceding claims, **characterised in that**
- the carrier base (2a) of the housing (2) comprises a lower section (2e) having a lower carrier surface (2g) and an upper section having an upper surface (2f).

5. Water tap according to Claim 4, **characterised in that**
- the upper surface (2f) is a surface that rises in the direction of the housing (2).

6. Water tap according to one of Claims 2 and 3 to 5 provided that there is a dependency upon Claim 2, **characterised in that**
- the actuating element (4) of the single lever mixer comprises a cap that is connected to the regulating mechanism, to a closed distal base (4a) and to an outer skirt (4b),
- a housing cap (5) encompasses at least the outer skirt (4b) of the cap, and
- the housing (2) and the housing cap (5) are separate pieces.

7. Water tap according to Claim 6, **characterised in that**
- the housing cap (5) is a moulded part that is embodied from a solid surface material having a low porosity that is embodied from resin having mineral fillers.

8. Water tap according to Claim 6 or 7, **characterised in that**
- the housing cap (5) is a moulded part that is embodied from the same material as the housing (2).

## Revendications

1. Robinet d'eau avec un support (6), présentant
- un corps métallique (1) ayant une base fermée (1a) qui est munie d'au moins une entrée d'eau (1d) et une partie avec une sortie d'eau (1b),
- un mécanisme de régulation pour réguler l'eau, qui est logé dans le corps métallique (1) entre l'entrée d'eau (1d) et la sortie d'eau (1b),
- un élément d'actionnement (4) qui relié au mécanisme de régulation, et
- un tube (1c) qui est relié à la sortie d'eau (1b),
dans lequel
- le robinet d'eau comprend un boîtier (2) qui entoure au moins la base fermée (1a) du corps métallique (1), le boîtier (2) présentant une base de support (2a),
- le corps métallique (1) est fixé dans le boîtier (2),
**caractérisé en ce que**
- le boîtier (2) est une pièce moulée constituée d'un matériau à surface solide de faible porosité en résine avec des charges minérales, qui est chimiquement soudable au support (6) constitué d'un matériau à surface solide de faible porosité en résine avec des charges minérales,
- le matériau à surface solide comprend au moins une résine choisie parmi les résines acryliques, les résines époxy, les résines de polyester, les résines de polyester modifiées avec des résines acryliques et leurs combinaisons, et/ou
- le matériau à surface solide comprend au moins une charge minérale choisie parmi les charges minérales constituées par la bauxite, les trihydrates d'aluminium, le marbre, le granit, la silice, le quartz, l'onyx, le gypse, le carbonate de calcium, le kaolin et leurs combinaisons,
- la base de support (2a) du boîtier (2) est soudée chimiquement au support (6) choisi parmi les plans de travail et les revêtements muraux, et
- le boîtier (2) est constitué du même matériau à surface solide que le matériau à surface solide du support (6) auquel il est soudé.

2. Robinet d'eau selon la revendication 1, **caractérisé en ce que**
- le robinet est un mélangeur à levier unique, le corps métallique (1) présentant une partie supérieure dans laquelle la sortie d'eau (1b) et le tube (1c) sont disposés, le tube (1c) étant fixé dans la sortie d'eau (1b), et le boîtier (2) entourant le corps métallique (1) et comprenant une ouverture de passage (2b) à travers laquelle s'étend le tube (1c).

3. Robinet d'eau selon l'une des revendications précédentes, **caractérisé en ce que**
- la sortie d'eau (1b) est un trou fileté dans lequel une partie filetée du tube (1c) est vissée, et
- l'ouverture de passage (2b) du boîtier (2) est un trou circulaire.

4. Robinet d'eau selon l'une des revendications précédentes, **caractérisé en ce que**
- la base de support (2a) du boîtier (2) comprend une partie inférieure (2e) ayant une surface de support inférieure (2g) et une partie supérieure ayant une surface supérieure (2f).

5. Robinet d'eau selon la revendication 4, **caractérisé en ce que**
- la surface supérieure (2f) est une surface qui s'élève en direction du boîtier (2).

6. Robinet d'eau selon l'une des revendications 2 et 3 à 5 lorsqu'elle dépend de la revendication 2, **caractérisé en ce que**
- l'élément d'actionnement (4) du mitigeur à levier unique comprend un capuchon qui est relié au mécanisme de régulation, avec une base distale fermée (4a) et une jupe extérieure (4b),
- un capuchon de boîtier (5) entoure au moins la jupe extérieure (4b) du capuchon, et
- le boîtier (2) et le capuchon de boîtier (5) sont des pièces séparées.

7. Robinet d'eau selon la revendication 6, **caractérisé en ce que**
- le capuchon de boîtier (5) est une pièce moulée constituée d'un matériau à surface solide de faible porosité en résine avec des charges minérales.

8. Robinet d'eau selon la revendication 6 ou 7, **caractérisé en ce que**
- le capuchon de boîtier (5) est une pièce moulée constituée du même matériau que le boîtier (2).
